# EUROPEAN PATENT SPECIFICATION

(11) **EP 2 293 929 B1**
(45) Date of publication and mention of the grant of the patent: **09.11.2011**
(21) Application number: 09757376.0
(22) Date of filing: 07.05.2009
(51) Int. Cl.: B32B 1/08, B32B 15/01, B32B 15/06, B32B 15/08, B32B 15/20, F16L 9/147

(54) **COMPOUND TUBES**
VERBUNDROHRE
TUBES COMPOSITES

(30) Priority: 05.06.2008 EP 08010261
(43) Date of publication of application: 16.03.2011
(73) Proprietor: Novelis, Inc., Toronto, ON M8Z 1J5 (CA)
(72) Inventor: FENG, Frank, Kingston Ontario (CA); POYETTON, Bernard, CH-3960 Switzerland (CH); RICHTER, Egbert, Gernrode (DE); AFSETH, Andreas, F-38000 Grenoble (FR)
(74) Representative: Wiedemann, Peter
(86) International application number: PCT/EP2009/055532
(87) International publication number: WO 2009/146993

(56) References cited:
- EP-A- 0 067 919
- EP-A- 1 209 400
- EP-A- 1 287 981
- US-A1- 2005 244 576

## Description

The present invention relates to compound tubes, (also known as multilayer pipes), in which a metallic layer element is provided made from an aluminium sheet product wherein the aluminium sheet product comprises at least one clad layer on at least one side of a core layer.

Compound tubes are used in a wide variety of applications. Applications include use as drinking water pipes for hot or cold water, as heating or cooling pipes, as gas pipes, for compressed air conduits, or in piping systems for oil. As such these multilayer pipes have to withstand various mechanical and environmental conditions.

Such multilayer pipes have to display: high resistance to temperature aging for water temperatures up to 200° F, (115°C), high pressure resistance, high resistance to chemical solvents aggressive liquids, lowest possible linear thermal expansion; high tensile strength, high form stability, high resistance to abrasion, high elongation at rupture for tube bending and joining and good creep resistance against the temperature-dependent aging behavior of the pipe material at water temperatures up to 200° F, (115°C)

A typical multilayer pipe consists of three main tubular layers. Most often the inner and outer layers are made from polyethylene or polypropylene. The intermediate layer is usually a metallic layer of aluminium or an aluminium alloy. The three main layers are usually bonded together with intermediate adhesive layers. The thickness of each layer may vary depending on use requirements but typically the metallic / aluminium layer is between 0.15 to 2 mm thick, more usually between 0.20 to 0.40 mm thick.

These multilayer pipes take advantage of the corrosion and chemical resistance of the plastic materials in combination with the strength or pressure capacity and vapour barrier properties of the intermediate aluminium layer. The resulting pipes are corrosion resistant, bendable (and in such a way that the bent form is retained), flexible and resist most acids, salt solutions, alkalis, fats and oils.

The aluminium layer prevents oxygen or other gases from permeating into the pipe which reduces or eliminates corrosion of other metallic installation components. The aluminium layer also moderates thermal expansion effects. The added strength from the aluminium layer increases the overall pressure-rupture strength of the pipe compared with simple plastic pipes.

Sections of multilayer pipes are butt or overlap welded together to ensure the aluminium layer is of a consistent thickness along its length. Although, in forming the pipes, the aluminium layer can be joined by overlapping and folding, it is also normal to longitudinally weld the aluminium layer to give seamlessly welded pipes.

WO 2008/058708 discloses an aluminium alloy product for use as the metallic layer in compound tubes which comprises a monolithic sheet product where the alloy contains, (all values in weight %): Si 0.2-1.4, Fe + Mn 1.1-1.8, Cu 0.15-0.5, Mg <0.2, Ti <0.2, Zn <1.5, impurities <0.05 each and <0.2 in total, balance aluminium.

US4216802 discloses a deformable composite pipe product. The product comprises a seamless inner tubular shaped layer made from a polymeric layer. The metallic layer is preferably made from an alloy of copper or aluminum and the outer layer can be selected from a variety of thermoplastically processable materials such as for example polyethylene, rubber, nylon, thermoplastic rubber, polyurethane and the like.

A three layer flexible pipe is described in EP0084088. The inside layer of this pipe is made of a heat resistant material such as perfluoroethylene propylene or polyvinylidene fluoride. The intermediate layer is a metal foil such as aluminum, whereas the thicker outer layer is made of an extruded polyamide, polypropylene or a polyethylene-propylene mixture or a cross-linked polyethylene; all of which are semi-crystalline thermoplastic polymers.

EP0230457 discloses a composite fuel and vapour tube. The composite tube is a bendable tubular article for transport of fuels which comprises a bendable metal strip formed sleeve extending throughout the length of the article and having an adhesive layer on the other surface of the metal sleeve. A flexible plastic jacket encases the metal sleeve. Additionally, the metal sleeve has a flexible bendable tubular liner that is made of petroleum resistant materials. The metal sleeve used in the invention is preferably aluminum. The metal sleeve offers sufficient strength to dominate over the resiliency of the plastic layer when the tubing is bent to a desired configuration.

US4,559,973 discloses a water impervious heat shrinkable tube. The tube comprises inner and outer layer plastic layers forming a tube and a laminated metal foil layer interposed between the inner and outer layers. The metal foil layer has a thickness of 0.1 mm. The plastic material laminated on both sides of the metal foil film is selected from the group consisting of polyethylene, polyvinyl chloride, saturated polyester, cross-linked polyethylene, ethylene-propylene rubber, silicon rubber, chloroprene rubber and fluoroplastic. Multilayer plastic or compound tubes or pipes having at least one reinforcing metal foil or layer and amongst them a selected Aluminium layer, are disclosed in EP-A1-067919, EP-A1-1209400, EP-A2-1287981 or in US2005/0244576 A1.

The aluminium alloys most commonly used for the metallic layer are AA1050, AA1200, AA3003, AA3005, AA3105, A8006 and AA8011. The alloy designation numbers used here are readily familiar to those skilled in the art of aluminium alloys and are described in "International Alloy Designations and Chemical Composition Limits for Wrought Aluminum and Wrought Aluminum Alloys", published by The Aluminum Association, revised January 2001. The use of the symbol X within the register and as a way of identifying alloy compositions is well understood by the skilled person.

Thin bands of these alloys, or foils, are used in a monolithic form, meaning that the aluminium layer is a single sheet or foil of the same composition throughout. Each alloy has a different composition which, naturally, affects its mechanical or environmental properties.

The 1XXX series of alloys covers aluminium compositions where the aluminium content is ≥99.00% by weight. The 1XXX series is also considered to fall into two categories. One category relates to wrought unalloyed aluminium having natural impurity limits. Common alloys include compositions known as 1050 or 1050A. The second category covers alloys where there is special control of one or more impurities. For this category the alloy designation includes a second numeral that is not zero, such as 1100, 1200, and so on.

The 3XXX series alloys have manganese as their main alloying element. AA3003 has a manganese content between 1.0 and 1.5 weight % and includes a small addition of copper (0.05-0.20 weight %). AA3105 contains Mn between 0.20-0.8 weight % and Mg between 0.30-0.8 weight %.

The 8XXX series of alloys is for other alloys where the main alloying elements are not those mentioned above. AA8006 has Fe as its main alloying element with an amount between 1.2-2.0 weight % along with an addition of Mn between 0.3-1.0 weight %. AA8011 has Fe and Si as the main alloying elements with Fe between 0.6-1.0 weight % and Si between 0.50-0.9 weight %.

Other alloy groups classified according to their main alloying element include the 5XXX series for alloys with Mg as the main element, 6XXX series where the main elements are Mg and Si and 7XXX for alloys with Zn as the main element.

Despite these prior art examples, problems still remain with the aluminium layers currently used within compound tubes. All of these alloys fulfil only partly the full range of requirements. Some have excellent corrosion resistance against salt water and good adhesion properties, but at the same time low mechanical properties. On the other hand, alloys with good mechanical properties tend to have low corrosion resistance.

Therefore, with the standard, (or conventional), monolithic alloys, it is not possible to obtain all the required properties of corrosion resistance, strength and good adhesion to the adhesive in one sheet. One has to compromise between these three families of properties.

It is an object of the invention to provide a compound tube where the aluminium sheet layer possesses all the required properties in the same produce: good corrosion resistance, high bondability to polyethylene at the surface and high strength in the core.

In accordance with the invention there is provided a multilayer pipe product comprising inner and outer plastic or polymer layers and an intermediate metallic layer characterized in that the intermediate metallic layer is a composite aluminium sheet comprising a core layer and at least one clad layer.

In a preferred embodiment the chemical composition of the first core layer is a composition selected from the group of alloys consisting of the 5XXX, 6XXX or 8XXX series of alloys.

In the case where the core layer is a 5XXX series alloy, more preferably, the chemical composition of the first core layer is a composition where the Mg content is between 0.3 and 3.0 weight %. The 5XXX series alloys have high strength and good corrosion resistance, but poor adhesion properties to polyethylene. An Mg content below 0.3 weight % provides insufficient strength. The maximum Mg content is limited to 3.0 weight % to allow sufficient elongation at rupture and to avoid any reduction in corrosion performance.

Typical 5XXX series alloys that contain this range of Mg, or overlap this range, include the following registered designations: 5005, 5005A, 5205, 5305, 5505, 5605, 5006, 5X10, 5016, 5017, 5018, 5021, 5040, 5043, 5X49, 5X50, 5X51, 5X52, 5X54 and 5X57.

As mentioned above, lengths of sheet are longitudinally welded to form individual pipes and the multilayer pipes are butt or overlap welded together to create lengthier pipes. Hot tearing, (i.e. cracks which appear during solidification after welding), can be a problem for liquid welding, (e.g. TIG or laser welding), of alloys with Mg between 0.5 and 2 weight %, although alloys with this Mg content can be welded using ultrasonic welding techniques. In a particularly preferred embodiment of the invention for such liquid welding practices, therefore, the core layer is a 5XXX series alloy where the Mg content is between 2.0 and 3.0 weight %. In this embodiment the chemical composition of the core layer is a 5XXX series aluminium alloy selected from the group consisting of 5021, 5X49, 5X52, 5454 and 5554. Of these, the alloys 5052 or 5054 are the most preferred core alloys for such purposes.

In the case where the core layer is a 6XXX series alloy the preferred composition of the first core layer is a composition where the combined Mg and Si content is <2 weight %. More preferably the combined Mg and Si content is <1 weight %. This limitation is due to the need for welding capability which can be impaired above this range. Typical 6XXX series alloys which meet the <1% criterion include the following registered designations: 6101, 6004, 6X06. 6014, 6060, 6160, 6260 and 6X63.

In the case where the core layer is an 8XXX series alloy the preferred composition is one where the Fe content is <2 weight %. Typical 8XXX series alloys which meet this criterion include the following registered designations: 8005, 8006, 8008, 8X11, 8014, 8015, 8016, 8018, 8021, 8030, 8130, 8040, 8050, 8150, 8076, 8176, 8077 and 8079. Of these, the preferred alloy is 8006.

In a preferred embodiment the chemical composition of the at least one clad layer is a composition selected from the group of alloys consisting of the 1XXX, 3XXX or 7XXX series of alloys. These alloys are selected mainly for their resistance to corrosion.

In the case where the clad layer is a 1XXX series alloy the preferred composition is one selected from the group consisting of 1050, 1050A, 1070 and 1200.

In the case where the clad layer is a 3XXX series alloy the preferred composition is one where the Mn content is <0.8 weight %. If the Mn content is >0.8 weight % corrosion performance is reduced. Typical 3XXX series alloys which meet this criterion include the following registered designations: 3002, 3102, 3105, 3105A, 3105B. 3006, 3X07, 3010, 3015, 3016, 3019, 3020, 3025 and 3030. In the case where the clad layer is a 3XXX series alloy the more preferred alloy is 3105.

In the case where the clad layer is a 7XXX series alloy the preferred composition is one where the Zn content is <2 weight %, and the maximum contents of Mg and Cu are both 0.2 weight %. The well known alloy 7072 meets this criterion although there are other compositional possibilities, of course, which have not been registered with the Aluminum Association.

The aluminium sheet layer incorporated within this invention can be fabricated by conventional methods known to those in the aluminium industry. For example, the sheet product can be made by a traditional roll bonding approach where the core layer and clad layers are initially cast as separate ingots, homogenized and hot rolled to an intermediate thickness, then hot or cold rolled together to form the composite structure, followed by further rolling as necessary. As is known to the skilled person, various heat treatment steps may be incorporated within this process if necessary, such as intermediate anneals.

An alternative method of manufacture for the aluminium sheet product involves casting the core and clad layers together to form a single ingot having distinct compositional regions. Such methods are also well known in the aluminium industry and are described by patents such as WO04/112992 or WO98/24571. The process according to WO04/112992 is better suited to manufacture of this product because there is no need for an interlayer during casting. Once the composite ingot has been cast it can be processed in the conventional manner and process steps may include homogenization, hot and cold rolling, together with other standard manufacturing steps such as annealing as may be considered necessary by the skilled person.

An example according to the invention will now be described. A composite ingot was cast using the method described in WO04/112992 comprising a core layer of an alloy of the 5050 composition and two clad layers of the 1050 composition.

The actual compositions for the different layers were (all values in weight %):
5050: Si 0.05%, Fe 0.10%, Cu 0.05%, Mn 0.10% and Mg 1.50%, all other elements as trace elements or impurities, balance aluminium.
1050: Si 0.06%, Fe 0.20%, Cu 0.04%, Mn 0.08%, Mg 0.02%, all other elements as trace elements or impurities, balance aluminium.

The cast ingot was scalped such that each clad layer thickness represented 10% of the total ingot thickness with the core representing 80% of the ingot thickness. The scalped ingot was homogenized, hot rolled and cold rolled in a conventional manner to a final sheet thickness of 0.22mm. The sheets were annealed to the O temper.

Samples of the 0.2mm cold-rolled sheet were formed into tubes and seam welded using TIG welding and ultrasonic welding at speeds of around 30m/min.

For comparison, monolithic sheets of the same thickness were produced in standard alloys AA1050, AA3003 and AA3105. All comparative sheet samples were also in the O temper.

The various samples were tensile tested and subject to corrosion testing where the samples were immersed in a neutral salt solution for 500 hours and the weight of material lost was measured.

The tensile results are shown in Table 1.

**Table 1:**

| Sample | Rₘ (MPa) | Rₚ (MPa) | A₅₀ (%) |
|---|---|---|---|
| Invention | 142 | 62 | 25 |
| AA1050 | 80 | 25 | 40 |
| AA3003 | 128 | 60 | 23 |
| AA3105 | 130 | 54 | 22 |

The inventive sample had better yield strengths than the monolithic samples except for AA3003.

The corrosion test results were that the inventive product, AA1050 and AA3105 samples had good corrosion properties. The inventive sample and AA1050 were equivalent. The AA3003 sample had poor corrosion resistance.

The inventive product thus provides a useful balance of tensile properties and corrosion resistance.

## Claims

1. A multilayer pipe product comprising inner and outer plastic, or polymer, layers and an intermediate metallic layer **characterized in that** the intermediate metallic layer is a composite aluminium sheet comprising a core layer and at least one clad layer.

2. A product as claimed in claim 1 wherein the composite aluminium sheet comprises two clad layers with one clad layer on each side of the core layer.

3. A product as claimed in claim 2 wherein the two clad layers are of the same composition.

4. A product as claimed in claim 1 wherein the core layer has a composition selected from the group of alloys consisting of the 5XXX, 6XXX or 8XXX series of alloys.

5. A product as claimed in claim 4 wherein the core layer comprises an alloy selected from the group consisting of 5005, 5005A, 5205, 5305, 5505, 5605, 5006, 5X10, 5016, 5017, 5018, 5021, 5040, 5043, 6X49, 5X50, 5X51, 5X52, 5X54 and 5X57.

6. A product as claimed in claim 5 wherein the core layer comprises an alloy selected from the group consisting of 5021, 5X49, 5X52, 5454 and 5554.

7. A product as claimed in claim 6 wherein the core layer comprises an alloy of 5052 or 5054.

8. A product as claimed in claim 4 wherein the core layer comprises an alloy selected from the group consisting of 6101, 6004, 6X06, 6014, 6060, 6160. 6260 and 6X63.

9. A product as claimed in claim 4 wherein the core layer comprises an alloy selected from the group consisting of 8005, 8006, 8008, 8X11, 8014, 8015, 8016, 8018, 8021, 8030, 8130, 8040, 8050, 8150, 8076, 8176, 8077 and 8079.

10. A product as claimed in claim 9 wherein the core layer comprises the 8006 alloy.

11. A product as claimed in claim 1 wherein the at least one clad layer has a composition selected from the group of alloys consisting of the 1XXX, 3XXX or 7XXX series of alloys.

12. A product as claimed in claim 11 wherein the at least one clad layer comprises an alloy selected from the group consisting of 1050, 1050A, 1070 and 1200.

13. A product as claimed in claim 11 wherein the at least one clad layer comprises an alloy selected from the group consisting of 3002, 3102, 3105, 3105A, 3105B, 3006, 3X07, 3010, 3015, 3016, 3019, 3020, 3025 and 3030.

14. A product as claimed in claim 13 wherein the at least one clad layer comprises the 3105 alloy.

15. A product as claimed in claim 11 wherein the at least one clad layer comprises a composition where the Zn content is <2 weight %, and the maximum contents of Mg and Cu are both 0.2 weight %.

## Patentansprüche

1. Mehrlagiges Röhrenprodukt, umfassend eine innere und eine äußere Kunststoff- oder Polymerschicht und eine dazwischenliegende Metallschicht, **dadurch gekennzeichnet, dass** die dazwischenliegende Metallschicht eine Aluminiumverbundbahn mit einer Kernschicht und zumindest einer Verkleidungsschicht ist.

2. Produkt nach Anspruch 1, wobei die Aluminiumverbundbahn zwei Verkleidungsschichten aufweist, wobei eine Verkleidungsschicht auf jeder Seite der Kernschicht vorliegt.

3. Produkt nach Anspruch 2, wobei die zwei Verkleidungsschichten aus derselben Verbindung sind.

4. Produkt nach Anspruch 1, wobei die Kernschicht eine Verbindung aufweist, die aus der Gruppe von Legierungen ausgewählt ist, die aus den 5XXX- , 6XXX- oder 8XXX- Reihen von Legierungen besteht.

5. Produkt nach Anspruch 4, wobei die Kernschicht eine Legierung aufweist, die aus der Gruppe ausgewählt ist, die aus 5005, 5005A, 5205, 5305, 5505, 5605, 5006, 5X10, 5016, 5017, 5018, 5021, 5040, 5043, 5X49, 5X50, 5X51, 5X52, 5X54 und 5X57 besteht.

6. Produkt nach Anspruch 5, wobei die Kernschicht eine Legierung aufweist, die aus der Gruppe ausgewählt ist, die aus 5021, 5X49, 5X52, 5454 und 5554 besteht.

7. Produkt nach Anspruch 6, wobei die Kernschicht eine Legierung aus 5052 oder 5054 aufweist.

8. Produkt nach Anspruch 4, wobei die Kernschicht eine Legierung aufweist, die aus der Gruppe ausgewählt ist, die aus 6101, 6004, 6X06, 6014, 6060, 6160, 6260 und 6X63 besteht.

9. Produkt nach Anspruch 4, wobei die Kernschicht eine Legierung aufweist, die aus der Gruppe ausgewählt ist, die aus 8005, 8006, 8008, 8X11, 8014, 8015, 8016, 8018, 8021, 8030, 8130, 8040, 8050, 8150, 8076, 8176, 8077 und 8079 besteht.

10. Produkt nach Anspruch 9, wobei die Kernschicht die 8006-Legierung aufweist.

11. Produkt nach Anspruch 1, wobei die zumindest eine Verkleidungsschicht eine Verbindung aufweist, die aus der Gruppe von Legierungen ausgewählt ist, die aus 1XXX- , 3XXX- oder 7XXX-Reihe von Aluminium besteht.

12. Produkt nach Anspruch 11, wobei die zumindest eine Verkleidungsschicht eine Legierung aufweist, die aus der Gruppe ausgewählt ist, die aus 1050, 1050A, 1070 und 1200 besteht.

13. Produkt nach Anspruch 11, wobei die zumindest eine Verkleidungsschicht eine Legierung aufweist, die aus der Gruppe ausgewählt ist, die aus 3002, 3102, 3105, 3105A, 3105B, 3006, 3X07, 3010, 3015, 3016, 3019, 3020, 3025 und 3030 besteht.

14. Produkt nach Anspruch 13, wobei die zumindest eine Verkleidungsschicht die 3105-Legierung aufweist.

15. Produkt nach Anspruch 11, wobei die zumindest eine Verkleidungsschicht eine Verbindung aufweist, bei der der Zn-Anteil <2 Gew.-% und die maximalen Anteile von Mg und Cu jeweils 0,2 Gew.-% sind.

## Revendications

1. Produit de tuyau multicouche comprenant des couches intérieure et extérieure en matière plastique ou en polymère, et une couche métallique intermédiaire, **caractérisé en ce que** la couche métallique intermédiaire est une tôle d'aluminium composite comprenant une couche de coeur et au moins une couche de gaine.

2. Produit selon la revendication 1, dans lequel la tôle d'aluminium composite comprend deux couches de gaine avec une couche de gaine sur chaque côté de la couche de coeur.

3. Produit selon la revendication 2, dans lequel les deux couches de gaine ont la même composition.

4. Produit selon la revendication 1, dans lequel la couche de coeur a une composition choisie dans le groupe d'alliages constitué par les séries d'alliages 5XXX, 6XXX ou 8XXX.

5. Produit selon la revendication 4, dans lequel la couche de coeur comprend un alliage choisi dans le groupe constitué par 5005, 5005A, 5205, 5305, 5505, 5605, 5006, 5X10, 5016, 5017, 5018, 5021, 5040, 5043, 5X49, 5X50, 5X51, 5X52, 5X54 et 5X57.

6. Produit selon la revendication 5, dans lequel la couche de coeur comprend un alliage choisi dans le groupe constitué par 5021, 5X49, 5X52, 5454 et 5554.

7. Produit selon la revendication 6, dans lequel la couche de coeur comprend un alliage de 5052 ou 5054.

8. Produit selon la revendication 4, dans lequel la couche de coeur comprend un alliage choisi dans le groupe constitué par 6101, 6004, 6X06, 6014, 6060, 6160, 6260 et 6X63.

9. Produit selon la revendication 4, dans lequel la couche de coeur comprend un alliage choisi dans le groupe constitué par 8005, 8006, 8008, 8X11, 8014, 8015, 8016, 8018, 8021, 8030, 8130, 8040, 8050, 8150, 8076, 8176, 8077 et 8079.

10. Produit selon la revendication 9, dans lequel la couche de coeur comprend l'alliage 8006.

11. Produit selon la revendication 1, dans lequel l'au moins une couche de gaine a une composition choisie dans le groupe d'alliages constitué par les séries d'alliages 1XXX, 3XXX et 7XXX.

12. Produit selon la revendication 11, dans lequel l'au moins une couche de gaine comprend un alliage choisi dans le groupe constitué par 1050, 1050A, 1070 et 1200.

13. Produit selon la revendication 11, dans lequel l'au moins une couche de gaine comprend un alliage choisi dans le groupe constitué par 3002, 3102, 3105, 3105A, 3105B, 3006, 3X07, 3010, 3015, 3016, 3019, 3020, 3025 et 3030.

14. Produit selon la revendication 13, dans lequel l'au moins une couche de gaine comprend l'alliage 3105.

15. Produit selon la revendication 11, dans lequel l'au moins une couche de gaine comprend une composition où la teneur en Zn est < 2 % en poids, et les teneurs maximales en Mg et Cu sont toutes deux de 0,2 % en poids.
